# EUROPEAN PATENT APPLICATION

(11) **EP 3 971 018 A1**
(43) Date of publication of application: **23.03.2022**
(21) Application number: 20862783.6
(22) Date of filing: 09.06.2020
(51) Int. Cl.: B60L 53/00, B60L 53/20, H02J 7/04, H02P 27/06, H01M 10/44

(54) **CHARGING-DISCHARGING CIRCUIT AND SYSTEM, AND ELECTRIC VEHICLE**

(30) Priority: 11.09.2019 CN 201910860488
(71) Applicant: Huawei Digital Power Technologies Co., Ltd., Shenzhen, Guangdong 518043 (CN)
(72) Inventor: SU, Feng, Shenzhen, Guangdong 518129 (CN); LIU, Weiping, Shenzhen, Guangdong 518129 (CN); LIANG, Yongtao, Shenzhen, Guangdong 518129 (CN)
(74) Representative: Maiwald Patent- und Rechtsanwaltsgesellschaft mbH
(86) International application number: PCT/CN2020/095122
(87) International publication number: WO 2021/047221

(57) **Abstract**

A charging and discharging circuit and system, and an electric vehicle are provided. The charging and discharging circuit includes a battery (1), a motor (5), a first charging interface (6), a first bridge arm (2), a second bridge arm (3), a third bridge arm (4), a first switch (K1), a second switch (K2), a third switch (K3), a fourth switch (K4), a fifth switch (SI), a sixth switch (S2), a seventh switch (S3), and an eighth switch (S4). In the structure, the charging and discharging circuit can implement a driving mode and a charging mode. Therefore, an unnecessary component in the charging and discharging circuit is omitted, thereby reducing a volume of the charging and discharging circuit.

## Description

### TECHNICAL FIELD

Embodiments of this application relate to the field of electric vehicles, and more specifically, to a charging and discharging circuit and system, and an electric vehicle.

### BACKGROUND

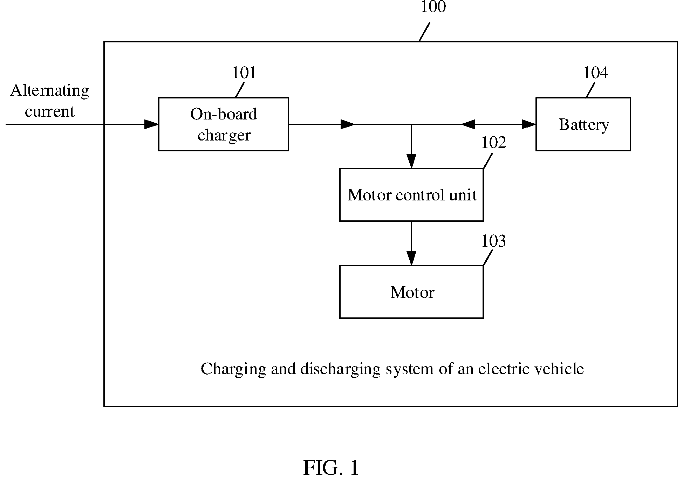

FIG. 1 is a schematic diagram of a charging and discharging system 100 of an existing electric vehicle. The charging and discharging system 100 of the existing electric vehicle includes an on-board charger 101, a motor control unit 102, a motor 103, and a battery 104. The on-board charger 101, the motor control unit 102, the motor 103, and the battery 104 are mutually independent components.

The charging and discharging system 100 of the electric vehicle has a charging function and a driving function. The charging function means that when the electric vehicle is in a non-running state, the on-board charger 101 converts a received alternating current into a direct current, performs step-down processing on the direct current, and transmits a direct current obtained after the step-down to the battery 104, to enable the battery 104 to be in a charging state. The driving function means that when the electric vehicle is in a non-charging state, the motor control unit 102 converts a direct current provided by the battery 104 into an alternating current, and transmits the alternating current to the motor 103, to enable the motor 103 to run.

Currently, the charging and discharging system of the existing electric vehicle has a relatively large quantity of components and occupies large space, and therefore cannot meet a miniaturization requirement. Therefore, how to reduce a quantity of components in a charging and discharging system of an electric vehicle to reduce a volume of the charging and discharging system becomes a technical problem that needs to be resolved urgently at present.

### SUMMARY

Embodiments of this application provide a charging and discharging circuit and system, and an electric vehicle, to reduce a quantity of components and reduce a volume.

The embodiments of this application are implemented as follows:

According to a first aspect, an embodiment of this application provides a charging and discharging circuit. The charging and discharging circuit includes a battery, a motor, a first charging interface, a first bridge arm, a second bridge arm, a third bridge arm, a first switch, a second switch, a third switch, a fourth switch, a fifth switch, a sixth switch, a seventh switch, and an eighth switch. A positive output terminal of the battery is separately connected to a positive terminal of the first bridge arm, a positive terminal of the second bridge arm, and a positive terminal of the third bridge arm by using the first switch, and a negative output terminal of the battery is separately connected to a negative terminal of the first bridge arm, a negative terminal of the second bridge arm, and a negative terminal of the third bridge arm. The motor includes a first inductor, a second inductor, and a third inductor, a first terminal of the first inductor is connected to a middle point of the first bridge arm, a first terminal of the second inductor is connected to a middle point of the second bridge arm, a first terminal of the third inductor is connected to a middle point of the third bridge arm, and a second terminal of the first inductor, a second terminal of the second inductor, and a second terminal of the third inductor are connected to a first terminal of the fourth switch. A first output terminal of the first charging interface is connected to the second terminal of the second inductor, and a second output terminal of the first charging interface is connected to the middle point of the third bridge arm. The second switch is disposed between the middle point of the second bridge arm and the first terminal of the second inductor, the third switch is disposed between the middle point of the third bridge arm and the first terminal of the third inductor, the fifth switch is disposed between the positive output terminal of the battery and the first terminal of the third inductor, the sixth switch is disposed between the middle point of the second bridge arm and the second terminal of the third inductor, the seventh switch is disposed between the first output terminal of the first charging interface and the second terminal of the second inductor, and the eighth switch is disposed between the first terminal of the second inductor and the second terminal of the first inductor.

In the first aspect, when the charging and discharging circuit is in a driving mode, the first switch, the second switch, the third switch, and the fourth switch are all in a closed state, the fifth switch, the sixth switch, the seventh switch, and the eighth switch are all in an open state, the first bridge arm, the second bridge arm, and the third bridge arm constitute a direct current-alternating current converter, and the first inductor, the second inductor, and the third inductor constitute the motor. In this case, the battery provides a direct current for the direct current-alternating current converter, and the direct current-alternating current converter converts the direct current provided by the battery into an alternating current and sends the alternating current to the motor. When the motor receives the alternating current sent by the direct current-alternating current converter, the motor starts to run. When the charging and discharging circuit is in a charging mode, the first switch, the second switch, the third switch, and the fourth switch are all in an open state, the fifth switch, the sixth switch, the seventh switch, and the eighth switch are all in a closed state, the first bridge arm, the third bridge arm, the first inductor, and the second inductor constitute an alternating current-direct current converter, and the second bridge arm and the third inductor constitute a step-down circuit. In this case, the first charging interface receives an alternating current provided by an external device, and sends the alternating current to the alternating current-direct current converter. The alternating current-direct current converter converts the alternating current provided by the first charging interface into a direct current, and sends the high-voltage direct current to the step-down circuit. The step-down circuit performs step-down processing on the high-voltage direct current provided by the alternating current-direct current converter, to obtain a low-voltage direct current, and sends the low-voltage direct current to the battery, to charge the battery. Therefore, the first switch, the second switch, the third switch, the fourth switch, the fifth switch, the sixth switch, the seventh switch, and the eighth switch are controlled, so that the charging and discharging circuit implements the driving mode and the charging mode. Therefore, an unnecessary component in the charging and discharging circuit is omitted, thereby reducing a volume of the charging and discharging circuit.

In a possible implementation, the charging and discharging circuit further includes a first capacitor and a second capacitor. A positive terminal of the first capacitor is connected to the positive output terminal of the battery, and a negative terminal of the first capacitor is connected to the negative output terminal of the battery. A positive terminal of the second capacitor is connected to a first terminal of the first switch, a negative terminal of the second capacitor is connected to the negative output terminal of the battery, and a second terminal of the first switch is connected to the positive output terminal of the battery.

When the charging and discharging circuit is in the driving mode, the first capacitor and the second capacitor are configured to filter input of the direct current-alternating current converter. When the charging and discharging circuit is in the charging mode, the first capacitor is configured to filter output of the step-down circuit, and the second capacitor is configured to filter output of the alternating current-direct current converter.

In a possible implementation, the charging and discharging circuit further includes a filtering module. A first input terminal of the filtering module is connected to the first output terminal of the first charging interface, and a second input terminal of the filtering module is connected to the second output terminal of the first charging interface. A first output terminal of the filtering module is connected to the second terminal of the second inductor by using the seventh switch, and a second output terminal of the filtering module is connected to the middle point of the third bridge arm.

When the charging and discharging circuit is in the charging mode, the filtering module is configured to suppress high-frequency interference in the charging and discharging circuit.

In a possible implementation, the charging and discharging circuit further includes a second charging interface and a three-phase rectifier bridge arm. A first input terminal of the three-phase rectifier bridge arm is connected to a first output terminal of the second charging interface, a second input terminal of the three-phase rectifier bridge arm is connected to a second output terminal of the second charging interface, and a third input terminal of the three-phase rectifier bridge arm is connected to a third output terminal of the second charging interface. A first output terminal of the three-phase rectifier bridge arm is connected to the first input terminal of the filtering module, and a second output terminal of the three-phase rectifier bridge arm is connected to the second input terminal of the filtering module.

When the charging and discharging circuit is in the charging mode, the second charging interface is configured to receive a three-phase alternating current provided by an external device, and the three-phase rectifier bridge arm is configured to convert the three-phase alternating current sent by the second charging interface into a two-phase alternating current.

In a possible implementation, the three-phase rectifier bridge arm includes a first diode, a second diode, a third diode, a fourth diode, a fifth diode, and a sixth diode. A negative electrode of the first diode, a negative electrode of the third diode, and a negative electrode of the fifth diode are all connected to the first input terminal of the filtering module, and a positive electrode of the second diode, a positive electrode of the fourth diode, and a positive electrode of the sixth diode are all connected to the second input terminal of the filtering module. A positive electrode of the first diode and a negative electrode of the second diode are both connected to the first output terminal of the second charging interface, a positive electrode of the third diode and a negative electrode of the fourth diode are both connected to the second output terminal of the second charging interface, and a positive electrode of the fifth diode and a negative electrode of the sixth diode are both connected to the third output terminal of the second charging interface.

In a possible implementation, the first bridge arm includes a first switching transistor and a second switching transistor, the second bridge arm includes a third switching transistor and a fourth switching transistor, and the third bridge arm includes a fifth switching transistor and a sixth switching transistor. A second pin of the first switching transistor is connected to a first pin of the second switching transistor, a second pin of the third switching transistor is connected to a first pin of the fourth switching transistor, and a second pin of the fifth switching transistor is connected to a first pin of the sixth switching transistor. A first pin of the first switching transistor, a first pin of the third switching transistor, and a first pin of the fifth switching transistor are all connected to the positive output terminal of the battery by using the first switch, and a second pin of the second switching transistor, a second pin of the fourth switching transistor, and a second pin of the sixth switching transistor are all connected to the negative output terminal of the battery. The second pin of the first switching transistor and the first pin of the second switching transistor are both connected to the first terminal of the first inductor, the second pin of the third switching transistor and the first pin of the fourth switching transistor are both connected to the first terminal of the second inductor, and the second pin of the fifth switching transistor and the first pin of the sixth switching transistor are both connected to the first terminal of the third inductor.

According to a second aspect, an embodiment of this application provides a charging and discharging system. The charging and discharging system includes a charging and discharging circuit and a controller, and the charging and discharging circuit includes a battery, a motor, a first charging interface, a first bridge arm, a second bridge arm, a third bridge arm, a first switch, a second switch, a third switch, a fourth switch, a fifth switch, a sixth switch, a seventh switch, and an eighth switch. The controller is separately connected to a control terminal of the first switch, a control terminal of the second switch, a control terminal of the third switch, a control terminal of the fourth switch, a control terminal of the fifth switch, a control terminal of the sixth switch, a control terminal of the seventh switch, and a control terminal of the eighth switch. A positive output terminal of the battery is separately connected to a positive terminal of the first bridge arm, a positive terminal of the second bridge arm, and a positive terminal of the third bridge arm by using the first switch, and a negative output terminal of the battery is separately connected to a negative terminal of the first bridge arm, a negative terminal of the second bridge arm, and a negative terminal of the third bridge arm. The motor includes a first inductor, a second inductor, and a third inductor, a first terminal of the first inductor is connected to a middle point of the first bridge arm, a first terminal of the second inductor is connected to a middle point of the second bridge arm, a first terminal of the third inductor is connected to a middle point of the third bridge arm, and a second terminal of the first inductor, a second terminal of the second inductor, and a second terminal of the third inductor are connected to a first terminal of the fourth switch. A first output terminal of the first charging interface is connected to the second terminal of the second inductor, and a second output terminal of the first charging interface is connected to the middle point of the third bridge arm. The second switch is disposed between the middle point of the second bridge arm and the first terminal of the second inductor, the third switch is disposed between the middle point of the third bridge arm and the first terminal of the third inductor, the fifth switch is disposed between the positive output terminal of the battery and the first terminal of the third inductor, the sixth switch is disposed between the middle point of the second bridge arm and the second terminal of the third inductor, the seventh switch is disposed between the first output terminal of the first charging interface and the second terminal of the second inductor, and the eighth switch is disposed between the first terminal of the second inductor and the second terminal of the first inductor. The controller is configured to: when receiving a control signal of a driving mode, separately send close signals to the first switch, the second switch, the third switch, and the fourth switch, and separately send open signals to the fifth switch, the sixth switch, the seventh switch, and the eighth switch; and when receiving a control signal of a charging mode, separately send open signals to the first switch, the second switch, the third switch, and the fourth switch, and separately send close signals to the fifth switch, the sixth switch, the seventh switch, and the eighth switch.

In the second aspect, when the controller receives the control signal of the driving mode, the controller separately sends the close signals to the first switch, the second switch, the third switch, and the fourth switch, and separately sends open signals to the fifth switch, the sixth switch, the seventh switch, and the eighth switch. In this case, the first switch, the second switch, the third switch, and the fourth switch are all in a closed state, the fifth switch, the sixth switch, the seventh switch, and the eighth switch are all in an open state, the first bridge arm, the second bridge arm, and the third bridge arm constitute a direct current-alternating current converter, and the first inductor, the second inductor, and the third inductor constitute the motor. In this case, the battery provides a direct current for the direct current-alternating current converter, and the direct current-alternating current converter converts the direct current provided by the battery into an alternating current and sends the alternating current to the motor. When the motor receives the alternating current sent by the direct current-alternating current converter, the motor starts to run.

In the second aspect, when the controller receives the control signal of the charging mode, the controller separately sends the open signals to the first switch, the second switch, the third switch, and the fourth switch, and separately sends close signals to the fifth switch, the sixth switch, the seventh switch, and the eighth switch. In this case, the first switch, the second switch, the third switch, and the fourth switch are all in an open state, the fifth switch, the sixth switch, the seventh switch, and the eighth switch are all in a closed state, the first bridge arm, the third bridge arm, the first inductor, and the second inductor constitute an alternating current-direct current converter, and the second bridge arm and the third inductor constitute a step-down circuit. In this case, the first charging interface receives an alternating current provided by an external device, and sends the alternating current to the alternating current-direct current converter. The alternating current-direct current converter converts the alternating current provided by the first charging interface into a high-voltage direct current, and sends the high-voltage direct current to the step-down circuit. The step-down circuit performs step-down processing on the high-voltage direct current provided by the alternating current-direct current converter, to obtain a low-voltage direct current, and sends the low-voltage direct current to the battery, to charge the battery.

In a possible implementation, the charging and discharging circuit further includes a first capacitor and a second capacitor. A positive terminal of the first capacitor is connected to the positive output terminal of the battery, and a negative terminal of the first capacitor is connected to the negative output terminal of the battery. A positive terminal of the second capacitor is connected to a first terminal of the first switch, a negative terminal of the second capacitor is connected to the negative output terminal of the battery, and a second terminal of the first switch is connected to the positive output terminal of the battery.

In a possible implementation, the charging and discharging circuit further includes a filtering module. A first input terminal of the filtering module is connected to the first output terminal of the first charging interface, and a second input terminal of the filtering module is connected to the second output terminal of the first charging interface. A first output terminal of the filtering module is connected to the second terminal of the second inductor by using the seventh switch, and a second output terminal of the filtering module is connected to the middle point of the third bridge arm.

In a possible implementation, the charging and discharging circuit further includes a second charging interface and a three-phase rectifier bridge arm. A first input terminal of the three-phase rectifier bridge arm is connected to a first output terminal of the second charging interface, a second input terminal of the three-phase rectifier bridge arm is connected to a second output terminal of the second charging interface, and a third input terminal of the three-phase rectifier bridge arm is connected to a third output terminal of the second charging interface. A first output terminal of the three-phase rectifier bridge arm is connected to the first input terminal of the filtering module, and a second output terminal of the three-phase rectifier bridge arm is connected to the second input terminal of the filtering module.

In a possible implementation, the three-phase rectifier bridge arm includes a first diode, a second diode, a third diode, a fourth diode, a fifth diode, and a sixth diode. A negative electrode of the first diode, a negative electrode of the third diode, and a negative electrode of the fifth diode are all connected to the first input terminal of the filtering module, and a positive electrode of the second diode, a positive electrode of the fourth diode, and a positive electrode of the sixth diode are all connected to the second input terminal of the filtering module. A positive electrode of the first diode and a negative electrode of the second diode are both connected to the first output terminal of the second charging interface, a positive electrode of the third diode and a negative electrode of the fourth diode are both connected to the second output terminal of the second charging interface, and a positive electrode of the fifth diode and a negative electrode of the sixth diode are both connected to the third output terminal of the second charging interface.

In a possible implementation, the first bridge arm includes a first switching transistor and a second switching transistor, the second bridge arm includes a third switching transistor and a fourth switching transistor, and the third bridge arm includes a fifth switching transistor and a sixth switching transistor. A second pin of the first switching transistor is connected to a first pin of the second switching transistor, a second pin of the third switching transistor is connected to a first pin of the fourth switching transistor, and a second pin of the fifth switching transistor is connected to a first pin of the sixth switching transistor. A first pin of the first switching transistor, a first pin of the third switching transistor, and a first pin of the fifth switching transistor are all connected to the positive output terminal of the battery by using the first switch, and a second pin of the second switching transistor, a second pin of the fourth switching transistor, and a second pin of the sixth switching transistor are all connected to the negative output terminal of the battery. The second pin of the first switching transistor and the first pin of the second switching transistor are both connected to the first terminal of the first inductor, the second pin of the third switching transistor and the first pin of the fourth switching transistor are both connected to the first terminal of the second inductor, and the second pin of the fifth switching transistor and the first pin of the sixth switching transistor are both connected to the first terminal of the third inductor.

According to a third aspect, an embodiment of this application provides an electric vehicle. The electric vehicle includes a charging and discharging system, a transmission system, a direct current converter, an air conditioning system, and a low-voltage system. A first output terminal of the charging and discharging system is connected to the transmission system, a second output terminal of the charging and discharging system is connected to an input terminal of the direct current converter, and a third output terminal of the charging and discharging system is connected to the air conditioning system. An output terminal of the direct current converter is connected to the low-voltage system. The charging and discharging system of the electric vehicle is the charging and discharging system according to any one of the second aspect or the implementations of the second aspect.

### BRIEF DESCRIPTION OF DRAWINGS

FIG. 1 is a schematic diagram of a charging and discharging system 100 of an existing electric vehicle;
FIG. 2 is a circuit diagram of a charging and discharging circuit according to an embodiment of this application;
FIG. 3 is a circuit diagram of another charging and discharging circuit according to an embodiment of this application;
FIG. 4 is a circuit diagram of still another charging and discharging circuit according to an embodiment of this application;
FIG. 5 is a circuit diagram of still another charging and discharging circuit according to an embodiment of this application;
FIG. 6 is a circuit diagram of still another charging and discharging circuit according to an embodiment of this application;
FIG. 7 is a circuit diagram of still another charging and discharging circuit according to an embodiment of this application;
FIG. 8 is a circuit diagram of still another charging and discharging circuit according to an embodiment of this application;
FIG. 9 is a circuit diagram of still another charging and discharging circuit according to an embodiment of this application;
FIG. 10 is a circuit diagram of still another charging and discharging circuit according to an embodiment of this application;
FIG. 11 is a circuit diagram of a charging and discharging system according to an embodiment of this application; and
FIG. 12 is a circuit diagram of an electric vehicle 200 according to an embodiment of this application.

### DESCRIPTION OF EMBODIMENTS

The following describes the technical solutions in embodiments of this application with reference to the accompanying drawings in the embodiments of this application.

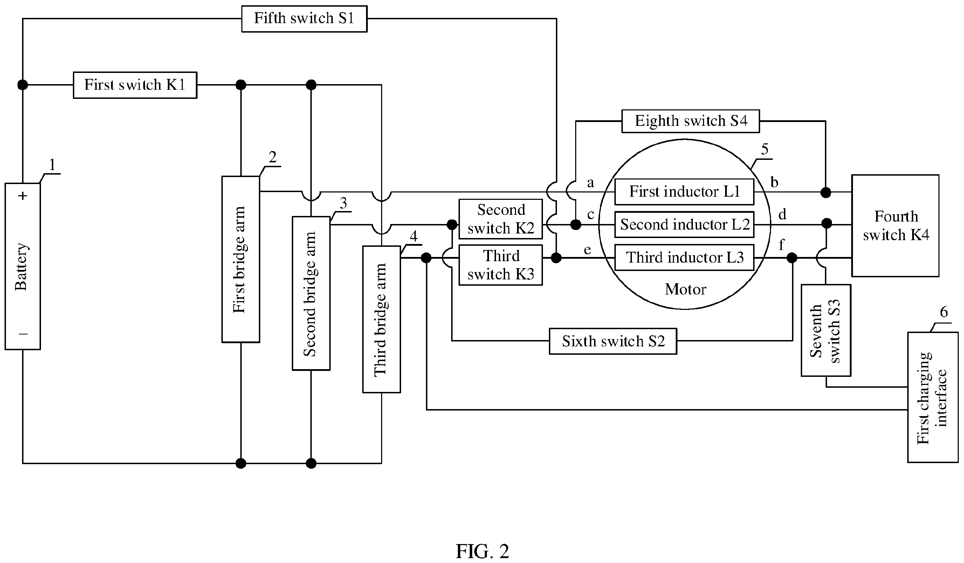

FIG. 2 is a circuit diagram of a charging and discharging circuit according to an embodiment of this application.

In the embodiment shown in FIG. 2, the charging and discharging circuit includes a battery 1, a first bridge arm 2, a second bridge arm 3, a third bridge arm 4, a motor 5, a first charging interface 6, a first switch K1, a second switch K2, a third switch K3, a fourth switch K4, a fifth switch S1, a sixth switch S2, a seventh switch S3, and an eighth switch S4.

In the embodiment shown in FIG. 2, a positive output terminal of the battery 1 is separately connected to a positive terminal of the first bridge arm 2, a positive terminal of the second bridge arm 3, and a positive terminal of the third bridge arm 4 by using the first switch K1, and a negative output terminal of the battery 1 is separately connected to a negative terminal of the first bridge arm 2, a negative terminal of the second bridge arm 3, and a negative terminal of the third bridge arm 4. The motor 5 includes a first inductor L1, a second inductor L2, and a third inductor L3, a first terminal a of the first inductor L1 is connected to a middle point of the first bridge arm 2, a first terminal c of the second inductor L2 is connected to a middle point of the second bridge arm 3, a first terminal e of the third inductor L3 is connected to a middle point of the third bridge arm 4, and a second terminal b of the first inductor L1, a second terminal d of the second inductor L2, and a second terminal f of the third inductor L3 are connected to a first terminal of the fourth switch K4. A first output terminal of the first charging interface 6 is connected to the second terminal d of the second inductor L2, and a second output terminal of the first charging interface 6 is connected to the middle point of the third bridge arm 4. The second switch K2 is disposed between the middle point of the second bridge arm 3 and the first terminal c of the second inductor L2, the third switch K3 is disposed between the middle point of the third bridge arm 4 and the first terminal e of the third inductor L3, the fifth switch S1 is disposed between the positive output terminal of the battery 1 and the first terminal e of the third inductor L3, the sixth switch S2 is disposed between the middle point of the second bridge arm 3 and the second terminal f of the third inductor L3, the seventh switch S3 is disposed between the first output terminal of the first charging interface 6 and the second terminal d of the second inductor L2, and the eighth switch S4 is disposed between the first terminal c of the second inductor L2 and the second terminal b of the first inductor L1.

In the embodiment shown in FIG. 2, when the charging and discharging circuit is in a driving mode, the first switch K1, the second switch K2, the third switch K3, and the fourth switch K4 are all in a closed state, the fifth switch S1, the sixth switch S2, the seventh switch S3, and the eighth switch S4 are all in an open state, the first bridge arm 2, the second bridge arm 3, and the third bridge arm 4 constitute a direct current-alternating current converter, and the first inductor L1, the second inductor L2, and the third inductor L3 constitute the motor 5. In this case, the battery 1 provides a direct current for the direct current-alternating current converter, and the direct current-alternating current converter converts the direct current provided by the battery 1 into an alternating current and sends the alternating current to the motor 5. When the motor 5 receives the alternating current sent by the direct current-alternating current converter, the motor 5 starts to run.

In the embodiment shown in FIG. 2, when the charging and discharging circuit is in a charging mode, the first switch K1, the second switch K2, the third switch K3, and the fourth switch K4 are all in an open state, the fifth switch S1, the sixth switch S2, the seventh switch S3, and the eighth switch S4 are all in a closed state, the first bridge arm 2, the third bridge arm 4, the first inductor L1, and the second inductor L2 constitute an alternating current-direct current converter, and the second bridge arm 3 and the third inductor L3 constitute a step-down circuit. In this case, the first charging interface 6 receives an alternating current provided by an external device, and sends the alternating current to the alternating current-direct current converter. The alternating current-direct current converter converts the alternating current provided by the first charging interface 6 into a direct current, and sends the high-voltage direct current to the step-down circuit. The step-down circuit performs step-down processing on the high-voltage direct current provided by the alternating current-direct current converter, to obtain a low-voltage direct current, and sends the low-voltage direct current to the battery 1, to charge the battery 1.

In the embodiment shown in FIG. 2, the first switch K1, the second switch K2, the third switch K3, the fourth switch K4, the fifth switch S1, the sixth switch S2, the seventh switch S3, and the eighth switch S4 are controlled, so that the charging and discharging circuit implements the driving mode and the charging mode. Therefore, an unnecessary component in the charging and discharging circuit is omitted, thereby reducing a volume of the charging and discharging circuit.

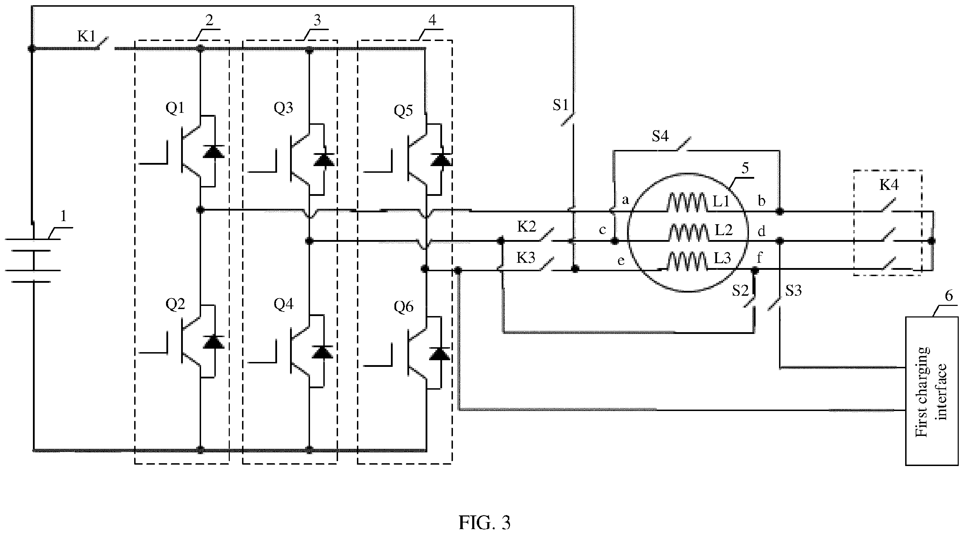

FIG. 3 is a circuit diagram of another charging and discharging circuit according to an embodiment of this application. The charging and discharging circuit shown in FIG. 2 and the charging and discharging circuit shown in FIG. 3 are equivalent structures.

In the embodiment shown in FIG. 3, a first bridge arm 2 includes a first switching transistor Q1 and a second switching transistor Q2, a second bridge arm 3 includes a third switching transistor Q3 and a fourth switching transistor Q4, and a third bridge arm 4 includes a fifth switching transistor Q5 and a sixth switching transistor Q6. A second pin of the first switching transistor Q1 is connected to a first pin of the second switching transistor Q2, a second pin of the third switching transistor Q3 is connected to a first pin of the fourth switching transistor Q4, and a second pin of the fifth switching transistor Q5 is connected to a first pin of the sixth switching transistor Q6. A first pin of the first switching transistor Q1, a first pin of the third switching transistor Q3, and a first pin of the fifth switching transistor Q5 are all connected to a positive output terminal of a battery 1 by using a first switch K1, and a second pin of the second switching transistor Q2, a second pin of the fourth switching transistor Q4, and a second pin of the sixth switching transistor Q6 are all connected to a negative output terminal of the battery 1. The second pin of the first switching transistor Q1 and the first pin of the second switching transistor Q2 are both connected to a first terminal a of a first inductor L1, the second pin of the third switching transistor Q3 and the first pin of the fourth switching transistor Q4 are both connected to a first terminal c of a second inductor L2, and the second pin of the fifth switching transistor Q5 and the first pin of the sixth switching transistor Q6 are both connected to a first terminal e of a third inductor L3.

In the embodiment shown in FIG. 3, the first switching transistor Q1, the second switching transistor Q2, the third switching transistor Q3, the fourth switching transistor Q4, the fifth switching transistor Q5, and the sixth switching transistor Q6 may be specifically implemented in a plurality of manners. For example, the switching transistor shown in FIG. 3 may be an insulated gate bipolar transistor, the switching transistor shown in FIG. 3 may be made of silicon carbide, or the switching transistor shown in FIG. 3 may be a metal-oxide semiconductor field-effect transistor. Certainly, a specific implementation of the switching transistor shown in FIG. 3 is not limited thereto, and the switching transistor shown in FIG. 3 may be alternatively another switching semiconductor component or the like.

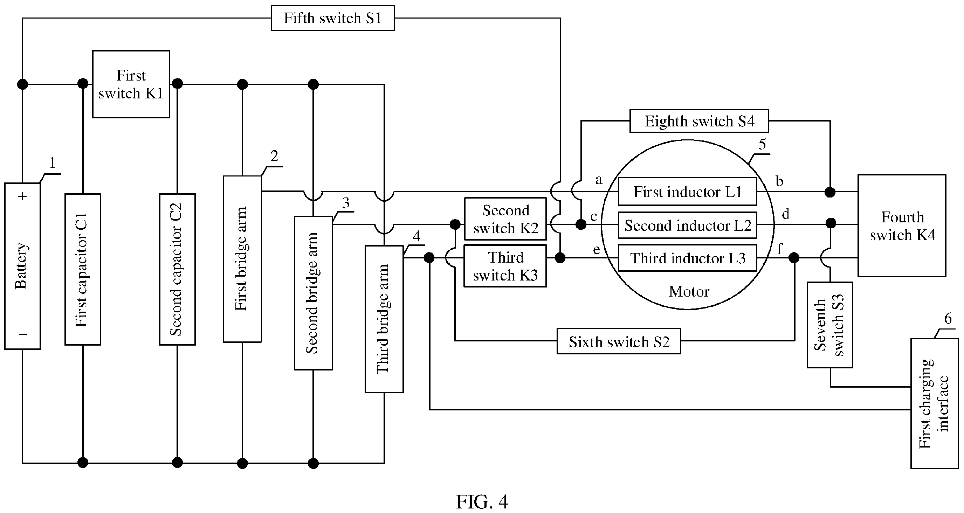

FIG. 4 is a circuit diagram of still another charging and discharging circuit according to an embodiment of this application.

In the embodiment shown in FIG. 4, the charging and discharging circuit further includes a first capacitor C1 and a second capacitor C2. A positive terminal of the first capacitor C1 is connected to a positive output terminal of a battery 1, and a negative terminal of the first capacitor C1 is connected to a negative output terminal of the battery 1. A positive terminal of the second capacitor C2 is connected to a first terminal of a first switch K1, a negative terminal of the second capacitor C2 is connected to the negative output terminal of the battery 1, and a second terminal of the first switch K1 is connected to the positive output terminal of the battery 1.

In the embodiment shown in FIG. 4, when the charging and discharging circuit is in a driving mode, the first switch K1, a second switch K2, a third switch K3, and a fourth switch K4 are all in a closed state, a fifth switch S1, a sixth switch S2, a seventh switch S3, and an eighth switch S4 are all in an open state, a first bridge arm 2, a second bridge arm 3, and a third bridge arm 4 constitute a direct current-alternating current converter, a first inductor L1, a second inductor L2, and a third inductor L3 constitute a motor 5, and the first capacitor C1 and the second capacitor C2 are configured to filter input of the direct current-alternating current converter.

In the embodiment shown in FIG. 4, when the charging and discharging circuit is in a charging mode, the first switch K1, the second switch K2, the third switch K3, and the fourth switch K4 are all in an open state, the fifth switch S1, the sixth switch S2, the seventh switch S3, and the eighth switch S4 are all in a closed state, the first bridge arm 2, the third bridge arm 4, the first inductor L1, and the second inductor L2 constitute an alternating current-direct current converter, and the second bridge arm 3 and the third inductor L3 constitute a step-down circuit. In this case, a first charging interface 6 receives an alternating current provided by an external device, and sends the alternating current to the alternating current-direct current converter. The first capacitor C1 is configured to filter output of the step-down circuit. The second capacitor C2 is configured to filter output of the alternating current-direct current converter.

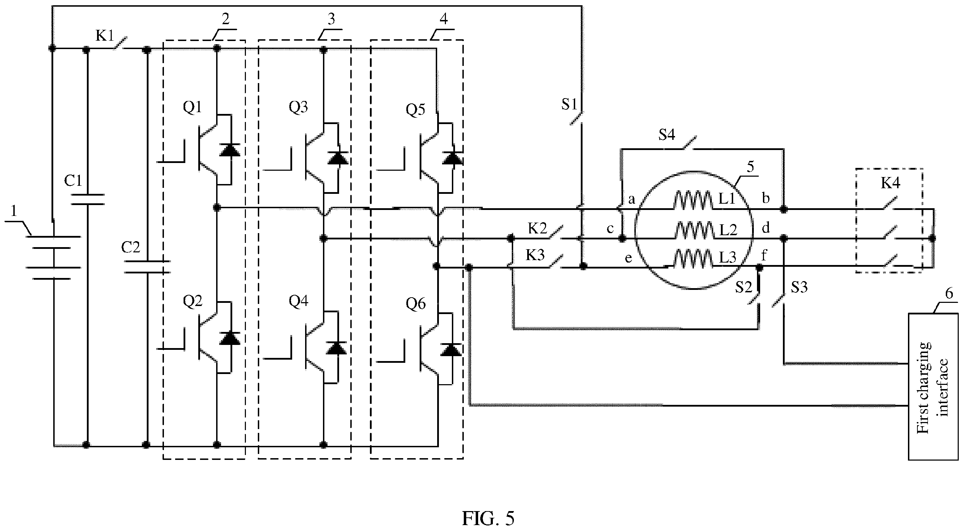

FIG. 5 is a circuit diagram of still another charging and discharging circuit according to an embodiment of this application. The charging and discharging circuit shown in FIG. 4 and the charging and discharging circuit shown in FIG. 5 are equivalent structures.

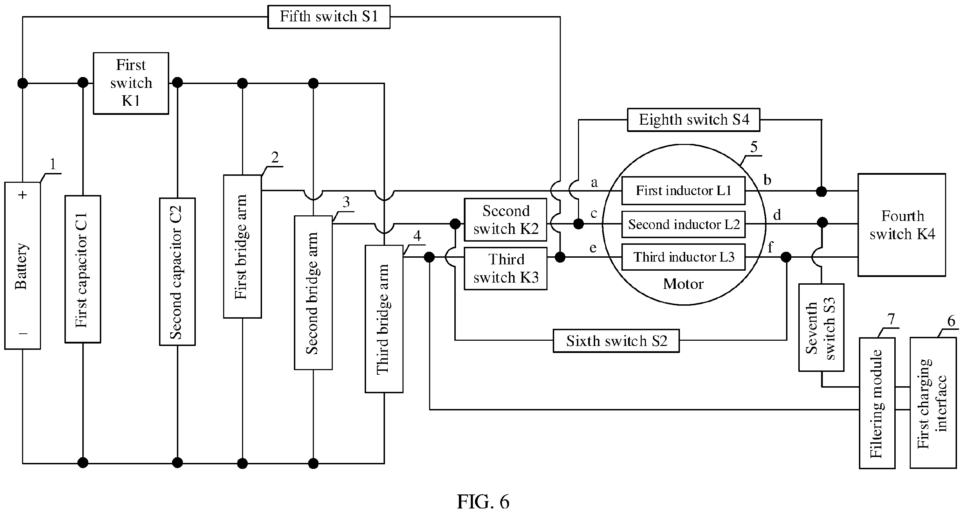

FIG. 6 is a circuit diagram of still another charging and discharging circuit according to an embodiment of this application.

In the embodiment shown in FIG. 6, the charging and discharging circuit further includes a filtering module 7. A first input terminal of the filtering module 7 is connected to a first output terminal of a first charging interface 6, and a second input terminal of the filtering module 7 is connected to a second output terminal of the first charging interface 6. A first output terminal of the filtering module 7 is connected to a second terminal d of a second inductor L2 by using a seventh switch S3, and a second output terminal of the filtering module 7 is connected to a middle point of a third bridge arm 4.

In the embodiment shown in FIG. 6, when the charging and discharging circuit is in a charging mode, a first switch K1, a second switch K2, a third switch K3, and a fourth switch K4 are all in an open state, a fifth switch S1, a sixth switch S2, the seventh switch S3, and an eighth switch S4 are all in a closed state, a first bridge arm 2, the third bridge arm 4, a first inductor L1, and the second inductor L2 constitute an alternating current-direct current converter, and a second bridge arm 3 and a third inductor L3 constitute a step-down circuit. In this case, the first charging interface 6 receives an alternating current provided by an external device, and sends the alternating current to the alternating current-direct current converter. The filtering module 7 is configured to suppress high-frequency interference in the charging and discharging circuit.

In the embodiment shown in FIG. 6, the filtering module 7 may be specifically an electromagnetic interference filter.

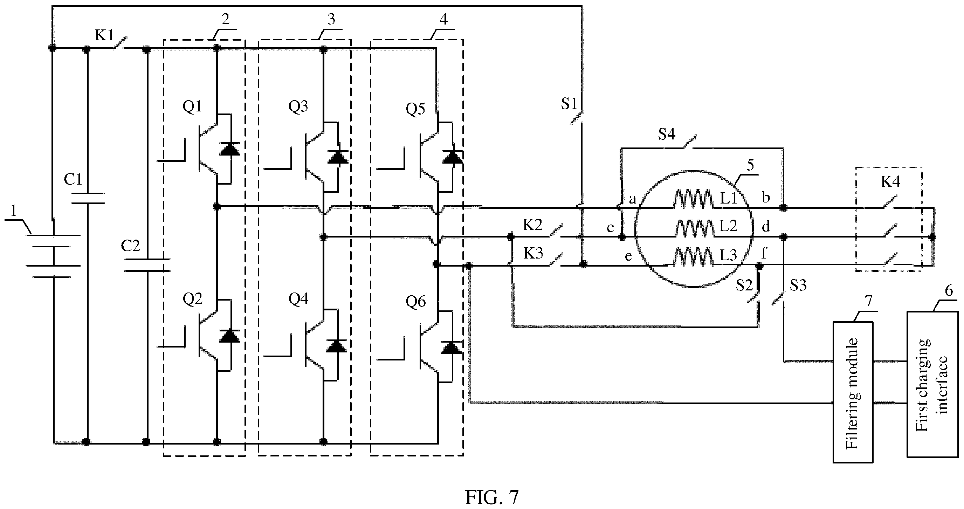

FIG. 7 is a circuit diagram of still another charging and discharging circuit according to an embodiment of this application. The charging and discharging circuit shown in FIG. 6 and the charging and discharging circuit shown in FIG. 7 are equivalent structures.

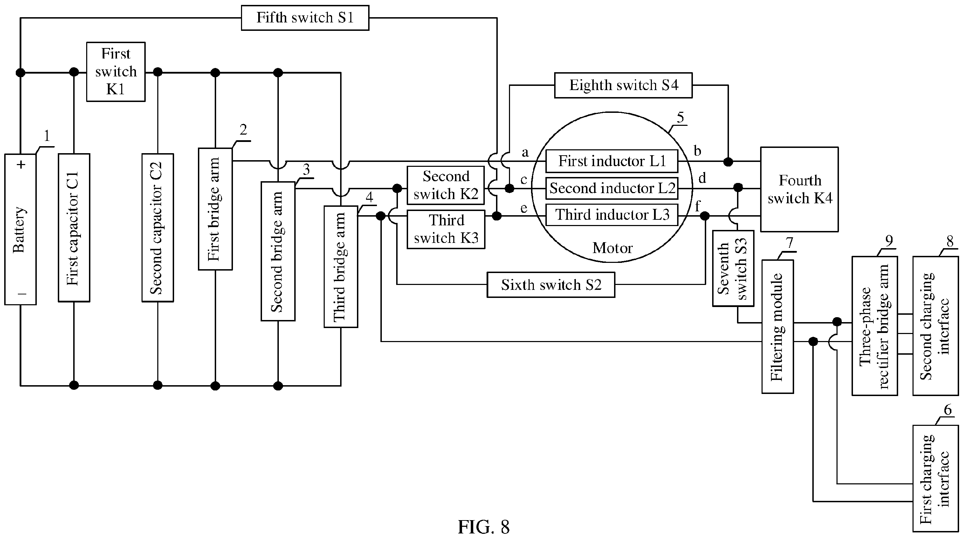

FIG. 8 is a circuit diagram of still another charging and discharging circuit according to an embodiment of this application.

In the embodiment shown in FIG. 8, the charging and discharging circuit further includes a second charging interface 8 and a three-phase rectifier bridge arm 9. A first input terminal of the three-phase rectifier bridge arm 9 is connected to a first output terminal of the second charging interface 8, a second input terminal of the three-phase rectifier bridge arm 9 is connected to a second output terminal of the second charging interface 8, and a third input terminal of the three-phase rectifier bridge arm 9 is connected to a third output terminal of the second charging interface 8. A first output terminal of the three-phase rectifier bridge arm 9 is connected to a first input terminal of a filtering module 7, and a second output terminal of the three-phase rectifier bridge arm 9 is connected to a second input terminal of the filtering module 7.

In the embodiment shown in FIG. 8, when the charging and discharging circuit is in a charging mode, a first switch K1, a second switch K2, a third switch K3, and a fourth switch K4 are all in an open state, a fifth switch S1, a sixth switch S2, a seventh switch S3, and an eighth switch S4 are all in a closed state, a first bridge arm 2, a third bridge arm 4, a first inductor L1, and a second inductor L2 constitute an alternating current-direct current converter, and a second bridge arm 3 and a third inductor L3 constitute a step-down circuit. In this case, the second charging interface 8 receives a three-phase alternating current provided by an external device, and sends the three-phase alternating current to the three-phase rectifier bridge arm 9. The three-phase rectifier bridge arm 9 converts the three-phase alternating current sent by the second charging interface 8 into a two-phase alternating current, and sends the two-phase alternating current to the filtering module 7.

In the embodiment shown in FIG. 8, the second charging interface 8 is configured to receive the three-phase alternating current provided by the external device, and the three-phase rectifier bridge arm 9 is configured to convert the three-phase alternating current sent by the second charging interface 8 into the two-phase alternating current. Therefore, the charging and discharging circuit shown in FIG. 8 can implement not only two-phase charging but also three-phase charging.

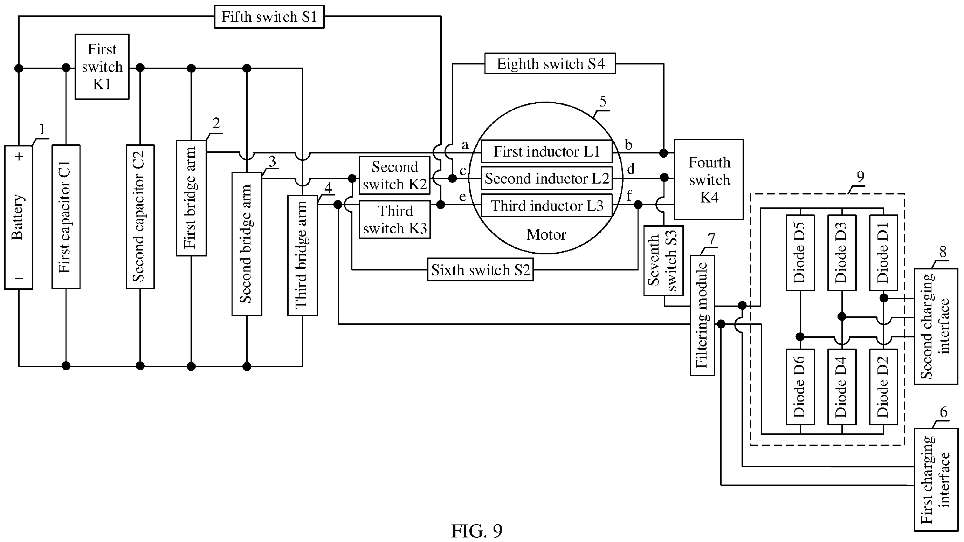

FIG. 9 is a circuit diagram of still another charging and discharging circuit according to an embodiment of this application.

In the embodiment shown in FIG. 9, a three-phase rectifier bridge arm 9 includes a first diode D1, a second diode D2, a third diode D3, a fourth diode D4, a fifth diode D5, and a sixth diode D6. A negative electrode of the first diode D1, a negative electrode of the third diode D3, and a negative electrode of the fifth diode D5 are all connected to a first input terminal of a filtering module 7, and a positive electrode of the second diode D2, a positive electrode of the fourth diode D4, and a positive electrode of the sixth diode D6 are all connected to a second input terminal of the filtering module 7. A positive electrode of the first diode D1 and a negative electrode of the second diode D2 are both connected to a first output terminal of a second charging interface 8, a positive electrode of the third diode D3 and a negative electrode of the fourth diode D4 are both connected to a second output terminal of the second charging interface 8, and a positive electrode of the fifth diode D5 and a negative electrode of the sixth diode D6 are both connected to a third output terminal of the second charging interface 8.

In the embodiment shown in FIG. 9, a specific structure of the three-phase rectifier bridge arm 9 is shown. Certainly, the three-phase rectifier bridge arm 9 is not limited to the structure shown in FIG. 9, and may be alternatively of another structure.

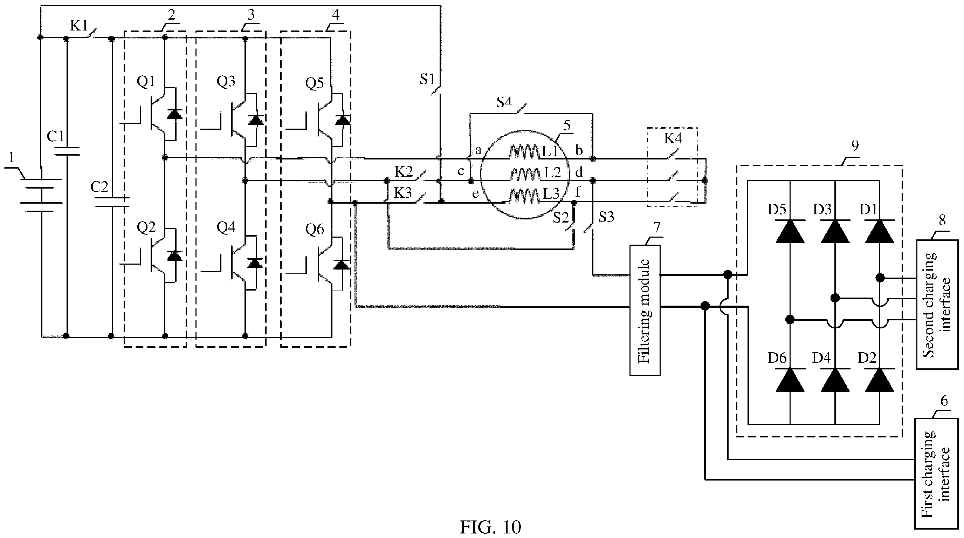

FIG. 10 is a circuit diagram of still another charging and discharging circuit according to an embodiment of this application. The charging and discharging circuit shown in FIG. 9 and the charging and discharging circuit shown in FIG. 10 are equivalent structures.

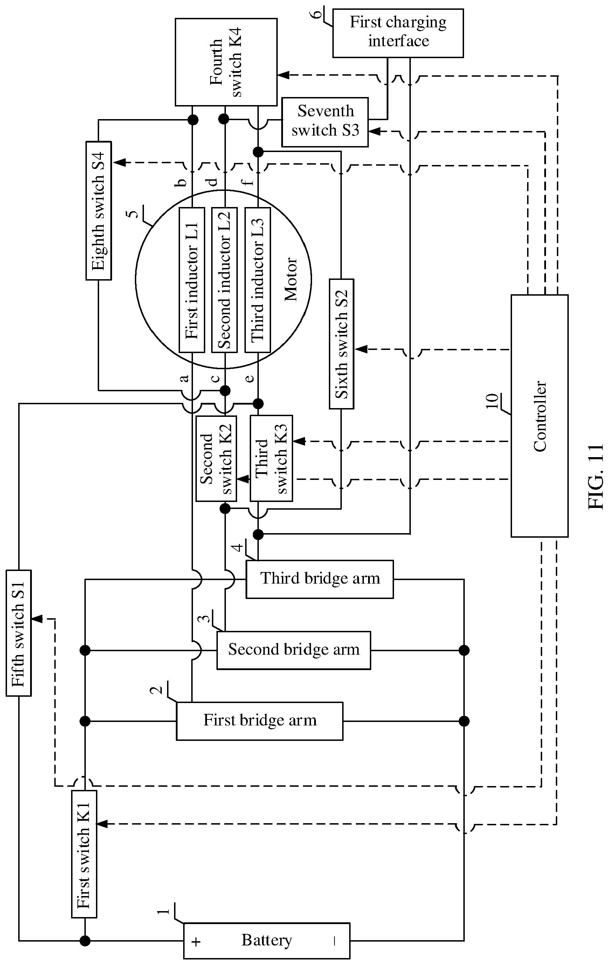

FIG. 11 is a circuit diagram of a charging and discharging system according to an embodiment of this application.

In the embodiment shown in FIG. 11, the charging and discharging system includes a charging and discharging circuit and a controller 10, and the charging and discharging circuit includes a battery 1, a motor 5, a first charging interface 6, a first bridge arm 2, a second bridge arm 3, a third bridge arm 4, a first switch K1, a second switch K2, a third switch K3, a fourth switch K4, a fifth switch S1, a sixth switch S2, a seventh switch S3, and an eighth switch S4.

In the embodiment shown in FIG. 11, the controller 10 is separately connected to a control terminal of the first switch K1, a control terminal of the second switch K2, a control terminal of the third switch K3, a control terminal of the fourth switch K4, a control terminal of the fifth switch S1, a control terminal of the sixth switch S2, a control terminal of the seventh switch S3, and a control terminal of the eighth switch S4.

A positive output terminal of the battery 1 is separately connected to a positive terminal of the first bridge arm 2, a positive terminal of the second bridge arm 3, and a positive terminal of the third bridge arm 4 by using the first switch K1, and a negative output terminal of the battery 1 is separately connected to a negative terminal of the first bridge arm 2, a negative terminal of the second bridge arm 3, and a negative terminal of the third bridge arm 4. The motor 5 includes a first inductor L1, a second inductor L2, and a third inductor L3, a first terminal a of the first inductor L1 is connected to a middle point of the first bridge arm 2, a first terminal c of the second inductor L2 is connected to a middle point of the second bridge arm 3, a first terminal e of the third inductor L3 is connected to a middle point of the third bridge arm 4, and a second terminal b of the first inductor L1, a second terminal d of the second inductor L2, and a second terminal f of the third inductor L3 are connected to a first terminal of the fourth switch K4. A first output terminal of the first charging interface 6 is connected to the second terminal d of the second inductor L2, and a second output terminal of the first charging interface 6 is connected to the middle point of the third bridge arm 4. The second switch K2 is disposed between the middle point of the second bridge arm 3 and the first terminal c of the second inductor L2, the third switch K3 is disposed between the middle point of the third bridge arm 4 and the first terminal e of the third inductor L3, the fifth switch S1 is disposed between the positive output terminal of the battery 1 and the first terminal e of the third inductor L3, the sixth switch S2 is disposed between the middle point of the second bridge arm 3 and the second terminal f of the third inductor L3, the seventh switch S3 is disposed between the first output terminal of the first charging interface 6 and the second terminal d of the second inductor L2, and the eighth switch S4 is disposed between the first terminal c of the second inductor L2 and the second terminal b of the first inductor L1.

In the embodiment shown in FIG. 11, when the controller 10 receives a control signal of a driving mode, the controller 10 separately sends close signals to the first switch K1, the second switch K2, the third switch K3, and the fourth switch K4, and separately sends open signals to the fifth switch S1, the sixth switch S2, the seventh switch S3, and the eighth switch S4. In this case, the first switch K1, the second switch K2, the third switch K3, and the fourth switch K4 are all in a closed state, the fifth switch S1, the sixth switch S2, the seventh switch S3, and the eighth switch S4 are all in an open state, the first bridge arm 2, the second bridge arm 3, and the third bridge arm 4 constitute a direct current-alternating current converter, and the first inductor L1, the second inductor L2, and the third inductor L3 constitute the motor 5.

The battery 1 provides a direct current for the direct current-alternating current converter, and the direct current-alternating current converter converts the direct current provided by the battery 1 into an alternating current and sends the alternating current to the motor 5. When the motor 5 receives the alternating current sent by the direct current-alternating current converter, the motor 5 starts to run.

In the embodiment shown in FIG. 11, when the controller 10 receives a control signal of a charging mode, the controller 10 separately sends open signals to the first switch K1, the second switch K2, the third switch K3, and the fourth switch K4, and separately sends close signals to the fifth switch S1, the sixth switch S2, the seventh switch S3, and the eighth switch S4. In this case, the first switch K1, the second switch K2, the third switch K3, and the fourth switch K4 are all in an open state, the fifth switch S1, the sixth switch S2, the seventh switch S3, and the eighth switch S4 are all in a closed state, the first bridge arm 2, the third bridge arm 4, the first inductor L1, and the second inductor L2 constitute an alternating current-direct current converter, and the second bridge arm 3 and the third inductor L3 constitute a step-down circuit.

The first charging interface 6 receives an alternating current provided by an external device, and sends the alternating current to the alternating current-direct current converter. The alternating current-direct current converter converts the alternating current provided by the first charging interface 6 into a high-voltage direct current, and sends the high-voltage direct current to the step-down circuit. The step-down circuit performs step-down processing on the high-voltage direct current provided by the alternating current-direct current converter, to obtain a low-voltage direct current, and sends the low-voltage direct current to the battery 1, to charge the battery 1.

In the embodiment shown in FIG. 11, the charging and discharging circuit may be alternatively any one of the charging and discharging circuits shown in FIG. 3 to FIG. 10.

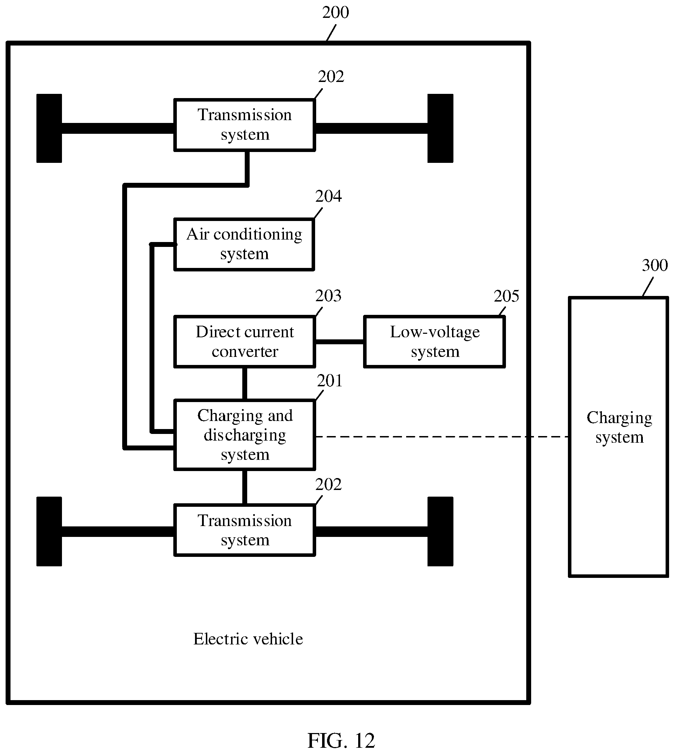

FIG. 12 is a circuit diagram of an electric vehicle 200 according to an embodiment of this application. The electric vehicle 200 shown in FIG. 12 includes a charging and discharging system 201, a transmission system 202, a direct current converter 203, an air conditioning system 204, and a low-voltage system 205.

In the embodiment shown in FIG. 12, a first output terminal of the charging and discharging system 201 is connected to the transmission system 202, a second output terminal of the charging and discharging system 201 is connected to an input terminal of the direct current converter 203, and a third output terminal of the charging and discharging system 201 is connected to the air conditioning system 204. An output terminal of the direct current converter 203 is connected to the low-voltage system 205.

In the embodiment shown in FIG. 12, a charging system 300 may be a charging pile, and the charging system 300 may be alternatively an external charger of the electric vehicle.

Refer to FIG. 11 and FIG. 12. The charging and discharging system 201 shown in FIG. 12 may be the charging and discharging system shown in FIG. 11. For an internal component of the charging and discharging system 201, refer to FIG. 11. For an internal system of the electric vehicle 200, refer to FIG. 12.

In the embodiments shown in FIG. 11 and FIG. 12, when the electric vehicle 200 is in a driving mode, the controller 10 separately sends close signals to the first switch K1, the second switch K2, the third switch K3, and the fourth switch K4, and separately sends open signals to the fifth switch S1, the sixth switch S2, the seventh switch S3, and the eighth switch S4. In this case, the first switch K1, the second switch K2, the third switch K3, and the fourth switch K4 are all in a closed state, the fifth switch S1, the sixth switch S2, the seventh switch S3, and the eighth switch S4 are all in an open state, the first bridge arm 2, the second bridge arm 3, and the third bridge arm 4 constitute a direct current-alternating current converter, and the first inductor L1, the second inductor L2, and the third inductor L3 constitute the motor 5.

The battery 1 of the charging and discharging system 201 provides a direct current for the direct current-alternating current converter, and the direct current-alternating current converter converts the direct current provided by the battery 1 into an alternating current and sends the alternating current to the motor 5. When the motor 5 receives the alternating current sent by the direct current-alternating current converter, the motor 5 starts to run.

In addition, the battery 1 further provides a high-voltage direct current for the transmission system 202, the direct current converter 203, and the air conditioning system 204. After receiving the high-voltage direct current provided by the battery 1, the transmission system 202 transmits power provided by the motor 5 to wheels of the electric vehicle. After the air conditioning system 204 receives the high-voltage direct current provided by the battery 1, the air conditioning system 204 starts to run. After the direct current converter 203 receives the high-voltage direct current provided by the battery 1, the direct current converter 203 converts the high-voltage direct current into a low-voltage direct current and sends the low-voltage direct current to the low-voltage system 205. After the low-voltage system 205 receives the low-voltage direct current provided by the direct current converter 203, all components in the low-voltage system 205 start to run.

The low-voltage system 205 includes a light system, a central control system, an instrument system, a wiper system, a glass lifting system, a water pump system, and the like.

In the embodiments shown in FIG. 11 and FIG. 12, when the electric vehicle 200 is in a charging mode, the controller 10 separately sends open signals to the first switch K1, the second switch K2, the third switch K3, and the fourth switch K4, and separately sends close signals to the fifth switch S1, the sixth switch S2, the seventh switch S3, and the eighth switch S4. In this case, the first switch K1, the second switch K2, the third switch K3, and the fourth switch K4 are all in an open state, the fifth switch S1, the sixth switch S2, the seventh switch S3, and the eighth switch S4 are all in a closed state, the first bridge arm 2, the third bridge arm 4, the first inductor L1, and the second inductor L2 constitute an alternating current-direct current converter, and the second bridge arm 3 and the third inductor L3 constitute a step-down circuit.

The first charging interface 6 of the charging and discharging system 201 receives an alternating current provided by the charging system 300, and sends the alternating current to the alternating current-direct current converter. The alternating current-direct current converter converts the alternating current provided by the first charging interface 6 into a high-voltage direct current, and sends the high-voltage direct current to the step-down circuit. The step-down circuit performs step-down processing on the high-voltage direct current provided by the alternating current-direct current converter, to obtain a low-voltage direct current, and sends the low-voltage direct current to the battery 1, to charge the battery 1.

## Claims

1. A charging and discharging circuit, wherein the charging and discharging circuit comprises a battery, a motor, a first charging interface, a first bridge arm, a second bridge arm, a third bridge arm, a first switch, a second switch, a third switch, a fourth switch, a fifth switch, a sixth switch, a seventh switch, and an eighth switch;
a positive output terminal of the battery is separately connected to a positive terminal of the first bridge arm, a positive terminal of the second bridge arm, and a positive terminal of the third bridge arm by using the first switch, and a negative output terminal of the battery is separately connected to a negative terminal of the first bridge arm, a negative terminal of the second bridge arm, and a negative terminal of the third bridge arm;
the motor comprises a first inductor, a second inductor, and a third inductor, a first terminal of the first inductor is connected to a middle point of the first bridge arm, a first terminal of the second inductor is connected to a middle point of the second bridge arm, a first terminal of the third inductor is connected to a middle point of the third bridge arm, and a second terminal of the first inductor, a second terminal of the second inductor, and a second terminal of the third inductor are connected to a first terminal of the fourth switch;
a first output terminal of the first charging interface is connected to the second terminal of the second inductor, and a second output terminal of the first charging interface is connected to the middle point of the third bridge arm; and
the second switch is disposed between the middle point of the second bridge arm and the first terminal of the second inductor, the third switch is disposed between the middle point of the third bridge arm and the first terminal of the third inductor, the fifth switch is disposed between the positive output terminal of the battery and the first terminal of the third inductor, the sixth switch is disposed between the middle point of the second bridge arm and the second terminal of the third inductor, the seventh switch is disposed between the first output terminal of the first charging interface and the second terminal of the second inductor, and the eighth switch is disposed between the first terminal of the second inductor and the second terminal of the first inductor.

2. The charging and discharging circuit according to claim 1, wherein the charging and discharging circuit further comprises a first capacitor and a second capacitor;
a positive terminal of the first capacitor is connected to the positive output terminal of the battery, and a negative terminal of the first capacitor is connected to the negative output terminal of the battery; and
a positive terminal of the second capacitor is connected to a first terminal of the first switch, a negative terminal of the second capacitor is connected to the negative output terminal of the battery, and a second terminal of the first switch is connected to the positive output terminal of the battery.

3. The charging and discharging circuit according to claim 2, wherein the charging and discharging circuit further comprises a filtering module;
a first input terminal of the filtering module is connected to the first output terminal of the first charging interface, and a second input terminal of the filtering module is connected to the second output terminal of the first charging interface; and
a first output terminal of the filtering module is connected to the second terminal of the second inductor by using the seventh switch, and a second output terminal of the filtering module is connected to the middle point of the third bridge arm.

4. The charging and discharging circuit according to claim 3, wherein the charging and discharging circuit further comprises a second charging interface and a three-phase rectifier bridge arm;
a first input terminal of the three-phase rectifier bridge arm is connected to a first output terminal of the second charging interface, a second input terminal of the three-phase rectifier bridge arm is connected to a second output terminal of the second charging interface, and a third input terminal of the three-phase rectifier bridge arm is connected to a third output terminal of the second charging interface; and
a first output terminal of the three-phase rectifier bridge arm is connected to the first input terminal of the filtering module, and a second output terminal of the three-phase rectifier bridge arm is connected to the second input terminal of the filtering module.

5. The charging and discharging circuit according to claim 4, wherein the three-phase rectifier bridge arm comprises a first diode, a second diode, a third diode, a fourth diode, a fifth diode, and a sixth diode;
a negative electrode of the first diode, a negative electrode of the third diode, and a negative electrode of the fifth diode are all connected to the first input terminal of the filtering module, and a positive electrode of the second diode, a positive electrode of the fourth diode, and a positive electrode of the sixth diode are all connected to the second input terminal of the filtering module; and
a positive electrode of the first diode and a negative electrode of the second diode are both connected to the first output terminal of the second charging interface, a positive electrode of the third diode and a negative electrode of the fourth diode are both connected to the second output terminal of the second charging interface, and a positive electrode of the fifth diode and a negative electrode of the sixth diode are both connected to the third output terminal of the second charging interface.

6. The charging and discharging circuit according to any one of claims 1 to 5, wherein the first bridge arm comprises a first switching transistor and a second switching transistor, the second bridge arm comprises a third switching transistor and a fourth switching transistor, and the third bridge arm comprises a fifth switching transistor and a sixth switching transistor;
a second pin of the first switching transistor is connected to a first pin of the second switching transistor, a second pin of the third switching transistor is connected to a first pin of the fourth switching transistor, and a second pin of the fifth switching transistor is connected to a first pin of the sixth switching transistor;
a first pin of the first switching transistor, a first pin of the third switching transistor, and a first pin of the fifth switching transistor are all connected to the positive output terminal of the battery by using the first switch, and a second pin of the second switching transistor, a second pin of the fourth switching transistor, and a second pin of the sixth switching transistor are all connected to the negative output terminal of the battery; and
the second pin of the first switching transistor and the first pin of the second switching transistor are both connected to the first terminal of the first inductor, the second pin of the third switching transistor and the first pin of the fourth switching transistor are both connected to the first terminal of the second inductor, and the second pin of the fifth switching transistor and the first pin of the sixth switching transistor are both connected to the first terminal of the third inductor.

7. A charging and discharging system, wherein the charging and discharging system comprises a charging and discharging circuit and a controller, and the charging and discharging circuit comprises a battery, a motor, a first charging interface, a first bridge arm, a second bridge arm, a third bridge arm, a first switch, a second switch, a third switch, a fourth switch, a fifth switch, a sixth switch, a seventh switch, and an eighth switch;
the controller is separately connected to a control terminal of the first switch, a control terminal of the second switch, a control terminal of the third switch, a control terminal of the fourth switch, a control terminal of the fifth switch, a control terminal of the sixth switch, a control terminal of the seventh switch, and a control terminal of the eighth switch;
a positive output terminal of the battery is separately connected to a positive terminal of the first bridge arm, a positive terminal of the second bridge arm, and a positive terminal of the third bridge arm by using the first switch, and a negative output terminal of the battery is separately connected to a negative terminal of the first bridge arm, a negative terminal of the second bridge arm, and a negative terminal of the third bridge arm;
the motor comprises a first inductor, a second inductor, and a third inductor, a first terminal of the first inductor is connected to a middle point of the first bridge arm, a first terminal of the second inductor is connected to a middle point of the second bridge arm, a first terminal of the third inductor is connected to a middle point of the third bridge arm, and a second terminal of the first inductor, a second terminal of the second inductor, and a second terminal of the third inductor are connected to a first terminal of the fourth switch;
a first output terminal of the first charging interface is connected to the second terminal of the second inductor, and a second output terminal of the first charging interface is connected to the middle point of the third bridge arm;
the second switch is disposed between the middle point of the second bridge arm and the first terminal of the second inductor, the third switch is disposed between the middle point of the third bridge arm and the first terminal of the third inductor, the fifth switch is disposed between the positive output terminal of the battery and the first terminal of the third inductor, the sixth switch is disposed between the middle point of the second bridge arm and the second terminal of the third inductor, the seventh switch is disposed between the first output terminal of the first charging interface and the second terminal of the second inductor, and the eighth switch is disposed between the first terminal of the second inductor and the second terminal of the first inductor; and
the controller is configured to: when receiving a control signal of a driving mode, separately send close signals to the first switch, the second switch, the third switch, and the fourth switch, and separately send open signals to the fifth switch, the sixth switch, the seventh switch, and the eighth switch; and when receiving a control signal of a charging mode, separately send open signals to the first switch, the second switch, the third switch, and the fourth switch, and separately send close signals to the fifth switch, the sixth switch, the seventh switch, and the eighth switch.

8. The charging and discharging system according to claim 7, wherein the charging and discharging circuit further comprises a first capacitor and a second capacitor;
a positive terminal of the first capacitor is connected to the positive output terminal of the battery, and a negative terminal of the first capacitor is connected to the negative output terminal of the battery; and
a positive terminal of the second capacitor is connected to a first terminal of the first switch, a negative terminal of the second capacitor is connected to the negative output terminal of the battery, and a second terminal of the first switch is connected to the positive output terminal of the battery.

9. The charging and discharging system according to claim 8, wherein the charging and discharging circuit further comprises a filtering module;
a first input terminal of the filtering module is connected to the first output terminal of the first charging interface, and a second input terminal of the filtering module is connected to the second output terminal of the first charging interface; and
a first output terminal of the filtering module is connected to the second terminal of the second inductor by using the seventh switch, and a second output terminal of the filtering module is connected to the middle point of the third bridge arm.

10. The charging and discharging system according to claim 9, wherein the charging and discharging circuit further comprises a second charging interface and a three-phase rectifier bridge arm;
a first input terminal of the three-phase rectifier bridge arm is connected to a first output terminal of the second charging interface, a second input terminal of the three-phase rectifier bridge arm is connected to a second output terminal of the second charging interface, and a third input terminal of the three-phase rectifier bridge arm is connected to a third output terminal of the second charging interface; and
a first output terminal of the three-phase rectifier bridge arm is connected to the first input terminal of the filtering module, and a second output terminal of the three-phase rectifier bridge arm is connected to the second input terminal of the filtering module.

11. The charging and discharging system according to claim 10, wherein the three-phase rectifier bridge arm comprises a first diode, a second diode, a third diode, a fourth diode, a fifth diode, and a sixth diode;
a negative electrode of the first diode, a negative electrode of the third diode, and a negative electrode of the fifth diode are all connected to the first input terminal of the filtering module, and a positive electrode of the second diode, a positive electrode of the fourth diode, and a positive electrode of the sixth diode are all connected to the second input terminal of the filtering module; and
a positive electrode of the first diode and a negative electrode of the second diode are both connected to the first output terminal of the second charging interface, a positive electrode of the third diode and a negative electrode of the fourth diode are both connected to the second output terminal of the second charging interface, and a positive electrode of the fifth diode and a negative electrode of the sixth diode are both connected to the third output terminal of the second charging interface.

12. The charging and discharging system according to any one of claims 7 to 11, wherein the first bridge arm comprises a first switching transistor and a second switching transistor, the second bridge arm comprises a third switching transistor and a fourth switching transistor, and the third bridge arm comprises a fifth switching transistor and a sixth switching transistor;
a second pin of the first switching transistor is connected to a first pin of the second switching transistor, a second pin of the third switching transistor is connected to a first pin of the fourth switching transistor, and a second pin of the fifth switching transistor is connected to a first pin of the sixth switching transistor;
a first pin of the first switching transistor, a first pin of the third switching transistor, and a first pin of the fifth switching transistor are all connected to the positive output terminal of the battery by using the first switch, and a second pin of the second switching transistor, a second pin of the fourth switching transistor, and a second pin of the sixth switching transistor are all connected to the negative output terminal of the battery; and
the second pin of the first switching transistor and the first pin of the second switching transistor are both connected to the first terminal of the first inductor, the second pin of the third switching transistor and the first pin of the fourth switching transistor are both connected to the first terminal of the second inductor, and the second pin of the fifth switching transistor and the first pin of the sixth switching transistor are both connected to the first terminal of the third inductor.

13. An electric vehicle, wherein the electric vehicle comprises a charging and discharging system, a transmission system, a direct current converter, an air conditioning system, and a low-voltage system;
a first output terminal of the charging and discharging system is connected to the transmission system, a second output terminal of the charging and discharging system is connected to an input terminal of the direct current converter, and a third output terminal of the charging and discharging system is connected to the air conditioning system;
an output terminal of the direct current converter is connected to the low-voltage system; and
the charging and discharging system is the charging and discharging system according to any one of claim 7 to claim 12.
